(19) Europäisches Patentamt
European Patent Office
Office européen des brevets

(11) EP 1 874 838 B1

(12) EUROPEAN PATENT SPECIFICATION

(45) Date of publication and mention of the grant of the patent:
**19.05.2010 Bulletin 2010/20**

(21) Application number: **06725255.1**

(22) Date of filing: **23.03.2006**

(51) Int Cl.:
***C08F 297/08*** *(2006.01)* ***C08L 23/14*** *(2006.01)*
***C08F 2/34*** *(2006.01)* ***C08F 2/00*** *(2006.01)*
***C08F 210/06*** *(2006.01)*

(86) International application number:
**PCT/EP2006/060976**

(87) International publication number:
**WO 2006/114357 (02.11.2006 Gazette 2006/44)**

# (54) PROPYLENE POLYMER COMPOSITION FOR THERMOFORMING

PROPYLENPOLYMERZUSAMMENSETZUNG ZUM THERMOFORMEN

COMPOSITION DE POLYPROPYLENE POUR THERMOFORMAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.04.2005 EP 05103509**
**05.05.2005 US 677913 P**

(43) Date of publication of application:
**09.01.2008 Bulletin 2008/02**

(73) Proprietor: **Basell Poliolefine Italia S.r.l.**
**20124 Milano (IT)**

(72) Inventors:
- **CAGNANI, Camillo**
**I-44100 Ferrara (IT)**
- **CAVALIERI, Claudio**
**I-44100 Ferrara (IT)**
- **MARZOLLA, Roberta**
**I-45030 Occhiobello (IT)**

(74) Representative: **Giberti, Stefano**
**Basell Poliolefine Italia S.r.l.**
**Intellectual Property**
**P.le G. Donegani 12**
**44100 Ferrara (IT)**

(56) References cited:
**US-A- 5 587 436**
**US-A1- 2003 162 907**
**US-A1- 2004 266 952**
**US-A1- 2005 113 517**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to thermoplastic polyolefin compositions and to articles obtained therefrom. In particular, the compositions described herein below are suitable for the production of thermoformed articles having good mechanical properties combined with good optical properties.

The European patent application WO01/92406 describes thermoplastic polyolefin compositions having improved impact strength and good optical properties comprising (A) from 70 to 90% of a random copolymer of propylene with ethylene, containing from 1 to 6% of ethylene, having a xylene-insoluble fraction at room temperature of not less than 93 wt% and (B) from 10 to 30% of a copolymer of propylene with ethylene containing from 8 to 18% of ethylene having a specific relationship between the percentage of copolymer (B) in the composition and its ethylene content. The said compositions have an excellent balance among mechanical and optical properties for blow molding applications, however such a balance is less satisfactory for applications in which good impact properties at low temperatures are required.

Thermoplastic polyolefin good low temperature impact properties are described in EP1448622. Said compositions, also showing low hexane-extractable moiety; comprise a propylene copolymer having xylene-insoluble fraction of not less than 85 wt% and a propylene copolymer with 8-40 wt% of alpha-olefin and have a (MFR L) of 3-30 g/10 min. The above-mentioned values of (MFR L) are obtained by subjecting to peroxidic degradation a precursor composition having a lower "MFR L". However, the peroxidic degradation enhance the ''Yellowness Index" of the polyolefins and the propylene polymer compositions thus obtained, normally white, turn to a yellowish color. Moreover, the peroxidic degradation normally results in the formation of smelly chemicals that can impair the use of visbroken polyolefins in food applications such as freezer packaging.

Therefore, it was an object of the present invention to provide new thermoplastic polyolefin compositions having a good balance of flexibility and low temperature impact properties at desired fluidity, retaining at the same time good optical properties and avoiding the problems associated with peroxidic degradation.

The present invention provides propylene polymer compositions comprising (weight percentages being referred to the sum of A+B):

(A) 60-90% by weight of a copolymer of propylene with ethylene containing less than 2.5%wt, preferably less than 2 and more preferably in the range 0.5 to 1.5 wt%, of ethylene units; and

(B) 10-40% by weight of a copolymer of propylene comprising from 15 to 35%wt, preferably from 18 to 30wt% and more preferably from 20 to 28%wt of ethylene units,

said polymer composition having a melt flow rate value according to ISO 1133 (230°C, 2.16 Kg) of less than 10 g/10min., preferably less than 5 and more preferably in the range 0.5-4 g/10 min.

Preferably, the propylene polymer compositions of the invention comprise 70-88%, more preferably from 75 to 88%by weight of component (A) and 12-30% preferably 12-25% by weight of component (B).

In a preferred embodiment, the component (A) of the propylene polymer compositions of the present invention has a xylene-soluble fraction at 25°C lower than 3.5% by weight. The xylene-soluble fraction is determined according to the method described hereinbelow.

For the most preferred propylene polymer compositions of the present invention the value of the equation

$$XS(tot) \times [C2(tot) - C2(A)] \qquad (1)$$

is higher than or equal to 35, preferably higher than 65, wherein C2(A) is the mole percent of comonomers in the copolymer (A), C2(tot) is the total mole percent of comonomers in the propylene polymer composition and XS(tot) is the total xylene-soluble fraction of the propylene polymer composition (percent by weight).

It has been surprisingly found that when the value of the equation (1) is higher then the above-mentioned critical values, the propylene polymer compositions of the present invention show a favorable balance of rigidity (flexural modulus), impact resistance (in terms of ductile/brittle transition temperature) and transparency (haze).

The molecular weight distribution of the propylene polymer composition of the invention measured by the method set forth below is higher than 3.5 and preferably higher than 4.

The propylene polymer compositions of the invention typically have a flexural modulus lower than 1200 MPa, preferably comprised in the range of from 750 and 1000 MPa and a ductile/brittle transition temperature not higher than 5°C, preferably in the range -20 to 0°C. Moreover, said propylene polymer compositions typically have a haze value measured on 1 mm plaque not higher than 40%, preferably not higher than 30%.

The value of the intrinsic viscosity of the component (B) is normally comprised between 0.5 dl/g and 3.5 dl/g,

preferably between 0.8 dl/g and 2.0 dl/g.

The propylene polymer compositions of the invention are characterized by a value of the Yellowness Index lower than 1.0 and they are further characterized by a low hexane extractable fraction, lower than 6.0 wt%, preferably lower than 5.0 wt%.

The propylene polymer compositions of the present invention can be prepared by sequential polymerization in at least two stages, with each subsequent polymerization stage being conducted in the presence of the polymeric material formed in the immediately preceding polymerization reaction, wherein the copolymer (A) is normally prepared in at least one first polymerization stage and the copolymer (B) is normally prepared in at least one second polymerization stage.

Preferably, each polymerization stage is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494,

EP728769, EP 1272533 and in the international patent application WO00/63261.

Preferably, the solid catalyst component comprises Mg, Ti, halogen and an electron donor selected from succinates of formula (I):

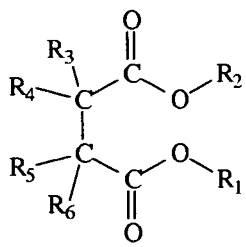

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms.

Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in

cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the succinate of formula (I) is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44001. The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

The organo-aluminum compound is preferably an alkyl-Al selected from the trialkyl aluminum compounds such as for example triethylaluminum, triisobutylaluminum, tri-n-butylaluminum, tri-n-hexylalurninum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropylmetildimethoxysilane. The external electron donor compound is used in such an amount to give a molar ratio between the organo-aluminum compound and said electron donor compound of from 0.1 to 500.

The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 12 MPa if the polymerization is carried out in gas-phase. The catalytic system can be precontacted (pre-polymerized) with small amounts of olefins. The molecular weight of the propylene polymer composition is regulated by using known regulators, such as hydrogen.

According to a preferred embodiment, the propylene polymer (A) is produced by a gas-phase polymerization process carried out in at least two interconnected polymerization zones. Said polymerization process is described in the European patent EP 782587.

The process is carried out in a first and in a second interconnected polymerization zone to which propylene and ethylene or propylene and alpha-olefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer.

In the second stage of the particularly preferred polymerization process, the propylene/ethylene copolymer (B)

is produced in a conventional fluidized-bed gas-phase reactor in the presence of the polymeric material and the catalyst system coming from the preceding polymerization step. The polymerization mixture is discharged from the downcomer to a gas-solid separator, and subsequently fed to the fluidized-bed gas-phase reactor operating under conventional conditions of temperature and pressure.

The propylene polymer compositions of the present invention can also be obtained by separately preparing the said copolymers (A) and (B), operating with the same catalysts and substantially under the same polymerization conditions as previously illustrated and subsequently mechanically blending said copolymers in the molten state using conventional mixing apparatuses, like twin-screw extruders.

The propylene polymer compositions of the present invention may further comprise additives commonly employed in the polyolefin field, such as antioxidants, light stabilizers, nucleating agents, antiacids, colorants and fillers.

The main applications of the propylene polymer compositions of the invention are the production of sheets for thermoforming applications and the production of articles from blow molding technique. The thermoformed articles comprising the propylene polymer compositions of the invention have good flexibility and good impact properties at low temperatures and are also endowed with good transparency. Due to the low hexane-extractable fraction of the polyolefin compositions of the invention and to the absence of smelly end-products of peroxidic degradation, the so obtained articles are particularly suitable for food applications particularly for cup and box used in the freezer food packaging.

The following examples are given to illustrate and not to limit the present invention.

Examples

The data of the propylene polymer materials were obtained according to the following methods:

Xylene-soluble faction

2.5 g of polymer and 250 mL of o-xylene are introduced in a glass flask equipped with a refrigerator and a magnetical stirrer. The temperature is raised in 30 minutes up to the boiling pint of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and the filtered liquid is divided into two 100 ml aliquots. One 100 ml aliquots of the filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

Comonomer (C2) content

By IR spectroscopy.

The comonomer content of the Component B is determined on the precipitated "amorphous" fraction of the polymer. The precipitated "amorphous" fraction is obtained as follows: to one 100 ml aliquot of the filtered liquid obtained as described above 200 ml of acetone are added under vigorous stirring. Precipitation must be complete as evidenced by a clear solid-solution separation. The solid thus obtained is filtered on a tared metallic screen and dried in a vacuum oven at 70°C until a constant weight is reached.

Molar ratio of feed gasses

Determined by gas-chromatography

Melt flow rate (MFR)

Determined according to ISO 1133 (230°C, 2.16 Kg)

Intrinsic viscosity

Determined in tetrahydronaphthalene at 135°C

Number average molecular weight and weight average molecular weight

The determination of the molecular weights and the molecular weight distribution Mw/Mn was carried out by

gel permeation chromatography (GPC) at 145°C in 1,2,4-trichlorobenzene using a GPC apparatus model 150C from Waters. The data were evaluated by means of the Win-GPC software from HS-Entwicklungsgesellschaft für wissenschaftliche Hard- und Software GmbH, Ober-Hilbersheim. The columns were calibrated by means of polypropylene standards having molecular weights from 100 to 107 g/mol.

Flexural modulus

Determined according to ISO 178

Stress at yield and at break

Determined according to ISO 527

Elongation at yield and break

Determined according to ISO 527

IZOD Impact Strength

Determined according to ISO 180/1A

Ductile/Brittle transition temperature (D/B)

According to this method, the bi-axial impact resistance is determined through impact with an automatic, computerized striking hammer.

The circular test specimens are obtained by cutting with circular hand punch (38 mm diameter). They are conditioned for at least 12 hours at 23°C and 50 RH and then placed in a thermostatic bath at testing temperature for 1 hour. The force-time curve is detected during impact of a striking hammer (5.3 kg, hemispheric punch with a ½" diameter) on a circular specimen resting on a ring support. The machine used is a CEAST 6758/000 type model no. 2.

D/B transition temperature is the temperature at which 50% of the samples undergoes fragile break when submitted to the above-mentioned impact test.

The plaques for D/B measurements, having dimensions of 127×127×1.5 mm are prepared according to the following method.

The injection press is a Negri Bossi™ type (NB 90) with a clamping force of 90 tons.

The mould is a rectangular plaque (127×127×1.5mm).

The main process parameters are reported below:

| | |
|---|---|
| Back pressure (bar): | 20 |
| Injection time (s): | 3 |
| Maximum Injection pressure (MPa): | 14 |
| Hydraulic injection pressure (MPa): | 6-3 |
| First holding hydraulic pressure (MPa): | 4±2 |
| First holding time (s): | 3 |
| Second holding hydraulic pressure (MPa): | 3±2 |
| Second holding time (s): | 7 |
| Cooling time (s): | 20 |
| Mould temperature (°C): | 60 |

The melt temperature is between 220 and 280° C.

Haze (on 1 mm plaque)

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method. 75x75x1 mm plaques are molded with a GBF

Plastiniector G235/90 Injection Molding Machine, 90 tons under the following processing conditions:

| | |
|---|---|
| Screw rotation speed: | 120 rpm |
| Back pressure: | 10 bar |
| Melt temperature: | 260°C |
| Injection time: | 5 sec |
| Switch to hold pressure: | 50 bar |
| First stage hold pressure: | 30 bar |
| Second stage pressure: | 20 bar |
| Hold pressure profile: | First stage 5 sec |
| | Second stage 10 sec |
| Cooling time: | 20 sec |
| Mold water temperature: | 40°C |

Hexane extractable

The hexane extractable fraction is determined according to modified FDA method (federal registration, title 21, Chapter 1, part 177, section 1520, s. Annex B) on polymer formed into 100 μm thick items

Melting temperature, melting enthalpy and crystallization temperature

Determined by DSC with a temperature variation of 20°C per minute

Yellowness Index

The determination of the yellowness index (YI) is obtained by directly measuring the X, Y and Z tristimulus coordinates on pellets using a tristimulus colorimeter capable of assessing the deviation of an object color from a preset standard white towards yellow in a dominant wavelength range between 570 and 580 nm. The geometric characteristics of the apparatus should allow perpendicular viewing of the light reflected by two light rays that hit the specimen at 45°, at an angle of 90° to each other, coming from a "Source C" according to CIE standard. After calibration, the glass container is filled with the pellets to be tested and the X, Y, Z coordinates are obtained to calculate the yellowness index according to the following equation:

$$YI = 100 * (1.274976795 * X - 1.058398178 * Z)/Y$$

Examples 1-4

The Ziegler-Natta catalyst was prepared according to the Example 5, lines 48-55 of the European Patent EP728769. Triethylaluminium (TEAL) was used as co-catalyst and dicyclopentyldimethoxysilane as external donor, with the weight ratios indicated in Table 1.

The propylene polymer compositions of the examples were prepared in a two-step polymerization process, wherein the copolymer (A) was prepared in the first polymerization step by feeing the monomers and the catalyst system to a gas-phase polymerization reactor comprising two interconnected polymerization zones, a riser and a downcomer, as described in the European Patent EP782587. The polymerization mixture was discharged from said reactor, conveyed to a gas-solid separator and the polymerized material was sent into a conventional gas-phase fluidized-bed reactor where the propylene/ethylene copolymer (B) was produced. The operative conditions are indicated in Table 1.

The polymer particles exiting from the second polymerization step were subjected to a steam treatment to remove the unreacted monomers and dried.

The propylene polymer compositions were added with the additives indicated in Table 2 and extruded in a twin-screw extruder Berstorff (L/D=33) under the following operating conditions:

| | |
|---|---|
| Temperature of the feeding section: | 190-210°C |
| Melt temperature: | 240°C |
| Temperature of the die section: | 230°C |

(continued)

| | |
|---|---|
| Flow rate: | 16 Kg/h |
| Rotational speed: | 250 rpm |

The properties measured on the samples are collected in Table 2.

Table 1

| EXAMPLE | | 1 | 2 | 3 | 4 |
|---|---|---|---|---|---|
| TEA/Donor | g/g | 6 | 6 | 6 | 6.5 |
| TEA/Catalyst | g/g | 5 | 5 | 5 | 5 |
| *Component A* | | | | | |
| Temperature | °C | 78 | 78 | 78 | 78 |
| Pressure | MPa | 27 | 27 | 27 | 27 |
| H2/C3 | mol/mol | 0.0020 | 0.0035 | 0.0025 | 0.0025 |
| MFR | g/10’ | 0.75 | 1.10 | 0.9 | 0.93 |
| C2(A) | wt% | 1.15 | 1.00 | 1.10 | 0.90 |
| X.S. | wt% | 2 | 1.9 | 2.6 | 2 |
| *Component B* | | | | | |
| Temperature | °C | 80 | 80 | 80 | 80 |
| Pressure | bar | 19 | 19 | 19 | 19 |
| Split | wt% | 22 | 18 | 16 | 21 |
| C2(B) | wt% | 22 | 22 | 24 | 19 |
| C2-/C2-+C3- | mol/mol | 0.11 | 0.11 | 0.13 | 0.10 |
| *Final composition* | | | | | |
| MFR | g/10’ | 1.5 | 1.3 | 1.3 | 1.4 |
| C2(tot) | wt% | 5.65 | 5.00 | 4.80 | 4.70 |
| X.S(tot) | wt% | 19.5 | 15.5 | 15.3 | 16.5 |
| X.S.I.V. | dl/g | 1.36 | 1.46 | 1.26 | 1.41 |

Table 2

| EXAMPLE | | 1 | 2 | 3 | 4 |
|---|---|---|---|---|---|
| *Pellets formulation* | | | | | |
| Irganox 1010 | wt% | 0.05 | 0.05 | 0.05 | |
| Irgafos 168 | wt% | 0.1 | 0.1 | 0.01 | |
| Calcium Stearate | wt% | 0.04 | 0.04 | 0.04 | 0.05 |
| Millad 3988 | wt% | 0.18 | 0.18 | 0.18 | 0.18 |
| Irganox B225 | Wt% | - | - | - | 0.150 |
| Oil OB 22 AT | wt% | - | - | 0.05 | 0.05 |
| *Characterization* | | | | | |
| Flexural modulus | MPa | 825 | 940 | 1035 | 1010 |

(continued)

| Characterization | | | | | |
|---|---|---|---|---|---|
| Stress at yield | MPa | 24.4 | 24.4 | 28.3 | 27.1 |
| Elongation at yield | % | 21.3 | 21.3 | 16.1 | 16.9 |
| Stress at break | MPa | 26.5 | 26.5 | 21.7 | 21.4 |
| IZOD 23°C | $kJ/m^2$ | 67.3 | 66 | 62.3 | NB |
| IZOD 0°C | $kJ/m^2$ | 44.1 | 36.8 | 24.0 | 30.0 |
| IZOD -20°C | $kJ/m^2$ | 3.4 | 3.1 | 2.4 | 2.9 |
| D/B transition temperature | °C | -19.6 | -9.3 | -5.8 | -7 |
| Haze (on 1mm plaque) | % | 16.8 | 15.8 | 15.1 | 15.3 |
| Irganox 1010 - Phenolic antioxidant ans long-term stabilizer supplied by CibaSpecialty;<br>Irganox B225 supplied by Ciba<br>Irgafos 168 - Stabilizer supplied by Ciba<br>Millad 3988 - Nucleating agent supplied by Milliken Europe<br>GMS 90 - antistatic agent supplied by Ciba Specialty Chemicals S.p.A. | | | | | |

**Claims**

**1.** A propylene polymer composition comprising (weight percentages being referred to the sum of A+B):

(A) 60-90% by weight of a copolymer of propylene with ethylene containing less than 2.5%wt of ethylene units; and
(B) 10-40% by weight of a copolymer of propylene comprising from 15 to 35%wt of ethylene units,

said polymer composition having a melt flow rate value according to ISO 1133 (230°C, 2.16 Kg) of less than 10 g/10min.

**2.** The propylene polymer composition according to claim 1, wherein the copolymer (A) contains less than 2 wt% of units derived from ethylene.

**3.** The propylene polymer composition according to claim 1 in which the component (B) comprises from 18 to 30% of ethylene units.

**4.** The propylene polymer composition according to any of claims 1, wherein the melt flow rate value according to ISO 1133 (230°C, 2.16 Kg) is less than 5.

**5.** The propylene polymer composition according to any of claims 1 to 4 comprising 70-88% by weight of component (A) and 12-30% by weight of component (B).

**6.** A process for preparing the propylene polymer composition according to any of claims 1 to 5 comprising at least two sequential polymerization steps wherein the copolymer (A) is prepared in at least one first polymerization step and the copolymer (B) is prepared in at least one second polymerization step, **characterized in that** the copolymer (A) is produced by a gas-phase polymerization process carried out in at least two interconnected polymerization zones.

**7.** A thermoformed article comprising the propylene polymer composition of any of claims 1 to 5.

**8.** A thermoformed article according to claim 7 having a Yellowness Index of less than 1.0.

## Patentansprüche

1. Propylenpolymer-Zusammensetzung, die (in Gewichtsprozenten, bezogen auf die Summe von A+B) Folgendes umfasst:

   (A) 60 bis 90 Gew.-% eines Copolymers von Propylen mit Ethylen mit weniger als 2,5 Gew.-% Ethylen-Einheiten; und
   (B) 10 bis 40 Gew.-% eines Copolymers von Propylen, das von 15 bis 35 Gew-% Ethylen-Einheiten umfasst,

   wobei die Polymerzusammensetzung einen Schmelzflussratenwert nach ISO 1133 (230 °C, 2,16 kg) von weniger als 10 g/10min aufweist.

2. Propylenpolymer-Zusammensetzung nach Anspruch 1, worin das Copolymer (A) weniger als 2 Gew.-% von Ethylen abgeleiteten Einheiten enthält.

3. Propylenpolymer-Zusammensetzung nach Anspruch 1, worin die Komponente (B) von 18 bis 30 % Ethylen-Einheiten umfasst.

4. Propylenpolymer-Zusammensetzung nach einem der Ansprüche 1, worin der Schmelzflussratenwert nach ISO 1133 (230 °C, 2,16 kg) weniger als 5 beträgt.

5. Propylenpolymer-Zusammensetzung nach einem der Ansprüche 1 bis 4, die 70 bis 88 Gew.-% der Komponente (A) und 12 bis 30 Gew.-% der Komponente (B) umfasst.

6. Verfahren zur Herstellung der Propylenpolymer-Zusammensetzung nach einem der Ansprüche 1 bis 5, das mindestens zwei sequenzielle Polymerisationsschritte umfasst, worin das Copolymer (A) in mindestens einem ersten Polymerisationsschritt und das Copolymer (B) in mindestens einem zweiten Polymerisationsschritt hergestellt wird, **dadurch gekennzeichnet, dass** das Copolymer (A) mittels eines Gasphasen-Polymerisationsverfahrens hergestellt wird, das in mindestens zwei miteinander verbundenen Polymerisationszonen durchgeführt wird.

7. Wärmegeformter Gegenstand, der die Propylenpolymer-Zusammensetzung nach einem der Ansprüche 1 bis 5 umfasst.

8. Wärmegeformter Gegenstand nach Anspruch 7 mit einem Yellowness-Index (Gelbindex) von weniger als 1,0.

## Revendications

1. Composition de polymère de propylène comprenant (les pourcentages en poids se référant à la somme de A+B) :

   (A) 60-90% en poids d'un copolymère de propylène avec de l'éthylène, contenant moins de 2,5% en poids d'unités éthylène ; et
   (B) 10-40% en poids d'un copolymère de propylène comprenant 15 à 35% en poids d'unités d'éthylène,

   ladite composition de polymère présentant une valeur de l'indice de fusion selon ISO 1133 (230°C, 2,16 kg) inférieure à 10 g/10 min.

2. Composition de polymère de propylène selon la revendication 1, dans laquelle le copolymère (A) contient moins de 2% en poids d'unités dérivées de l'éthylène.

3. Composition de polymère de propylène selon la revendication 1, dans laquelle le composant (B) comprend 18 à 30% d'unités d'éthylène.

4. Composition de polymère de propylène selon l'une quelconque des revendications 1, dans laquelle la valeur de l'indice de fusion selon ISO 1133 (230°C, 2,16 kg) est inférieure à 5.

5. Composition de polymère de propylène selon l'une quelconque des revendications 1 à 4 comprenant 70-88% en poids de composant (A) et 12-30% en poids de composant (B).

6. Procédé pour la préparation de la composition de polymère de propylène selon l'une quelconque des revendications 1 à 5 comprenant au moins deux étapes de polymérisation séquentielles, où le copolymère (A) est préparé dans au moins une première étape de polymérisation et le copolymère (B) est préparé dans au moins une deuxième étape de polymérisation, **caractérisé en ce que** le copolymère (A) est produit par un procédé de polymérisation en phase gazeuse effectué dans au moins deux zones de polymérisation interconnectées.

7. Objet thermoformé comprenant la composition de polymère de propylène selon l'une quelconque des revendications 1 à 5.

8. Objet thermoformé selon la revendication 7 présentant un indice de jaune inférieur à 1,0.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP WO0192406 A
- EP 1448622 A
- EP 45977 A
- EP 361494 A
- EP 728769 A
- EP 1272533 A
- WO 0063261 A
- US 4399054 A
- US 4469648 A
- EP 395083 A
- WO 9844001 A
- EP 782587 A